# DEMANDE DE BREVET EUROPEEN

(11) **EP 2 763 033 A2**
(43) Date de publication de la demande: **06.08.2014**
(21) Numéro de dépôt: 14153159.0
(22) Date de dépôt: 30.01.2014
(51) Int. Cl.: G06F 9/445

(54) **Déploiement d'images systèmes doubles dans une grappe de serveurs**

(30) Priorité: 31.01.2013 FR 1350820
(71) Demandeur: BULL SAS, 78340 Les Clayes sous Bois (FR)
(72) Inventeur: Flacard, Emmanuel, 38260 Ornacieux (FR); Iceta, Thierry, 38000 Grenoble (FR); Georges, Julien, 81860 Bruyeres le Chatel (FR)
(74) Mandataire: Camus, Olivier Jean-Claude

(57) **Abrégé**

Procédé de déploiement d'une image sur les noeuds d'une grappe (300) d'ordinateurs comportant les étapes suivantes :
- Première installation et configuration (1000) d'un premier ordinateur (100) de référence en fonction d'au moins une tâche de traitement attribuée à la grappe
- Premier enregistrement (1010), sur un moyen (230) de stockage connecté à un ordinateur (200) superviseur de la grappe, d'une première image (234) du premier l'ordinateur de référence comportant une copie (234FS) du système de fichiers de référence du système de fichiers (138) de l'ordinateur de référence, des instructions (234C) de configuration matérielle,
- Emission (1020), par le superviseur vers les noeuds, d'un message de déploiement standard de la première image,
- Pour chaque noeud, redémarrage (1030) et exécution, via un micronoyau, du déploiement conformément au message de déploiement,

caractérisé en ce que le procédé de déploiement comporte les caractéristiques suivantes :
- lors de la configuration du premier ordinateur de référence, installation (1000) d'outils pour le déploiement d'une deuxième image,
- lors de l'enregistrement de la première image ajout (1010), aux instructions de configuration matérielle, d'une instruction de création d'une partition supplémentaire.

## Description

### DOMAINE TECHNIQUE DE L'INVENTION

L'invention se rapporte au déploiement d'images systèmes dans une grappe de serveurs.

On entendra par grappe de serveurs dans le cadre de la présente demande un regroupement de plusieurs ordinateurs aptes à coopérer pour la réalisation d'une tâche. Sont en particulier visées les grappes de serveurs à haute performance aussi appelées cluster HPC, ferme de calcul, ou tout simplement grappe. Une grappe de serveurs est classiquement un ensemble de quelques milliers d'ordinateurs, classiquement de mille à cinq mille. Cependant il existe des grappes de serveurs plus petites et plus grosses. On connaît par exemple une grappe de dix ordinateurs. L'invention se rapporte à l'ensemble des grappes de serveurs quelques soient leurs tailles.

Dans une grappe d'ordinateurs il y en a au moins un qui a le rôle de superviseur. Ce rôle est aussi désigné comme rôle de management. Les ordinateurs non superviseurs sont désignés comme les noeuds de la grappe. On entendra par déploiement le fait de fournir à chaque noeud un système d'exploitation.

Une image est aussi appelée une image machine. C'est un fichier qui enregistre toutes les caractéristiques, données et capacités d'une machine physique. Les capacités sont aussi bien des capacités de traitement, par exemple des algorithmes de calcul, que de stockages par exemple la taille des disques.

### ETAT DE LA TECHNIQUE ANTERIEURE

Dans l'état de la technique on sait déployer une image sur les noeuds d'une grappe. Un déploiement d'image comporte les étapes suivantes :
- Installation et configuration d'un ordinateur de référence en fonction de la tâche de traitement attribuée à la grappe, cet ordinateur n'appartient pas à la grappe en ce sens qu'il n'est ni un superviseur ni un noeud ;
- Prise de l'image :
   - Recopie du système de fichiers de la machine de référence, on obtient ainsi une copie du système de fichiers de référence,
   - Association à la copie du système de fichiers de référence d'instructions de configuration matérielle,
- Emission, par le superviseur de la grappe vers les noeuds de la grappe, d'une commande de déploiement
- Réception et exécution de la commande de déploiement par les noeuds de la grappe :
   - Chargement d'un micronoyau dans la mémoire du noeud pour :
   - Récupérer la copie du système de fichiers de référence et les instructions de configuration
   - Exécuter les instructions de configuration matérielle,
   - Enregistrer sur le noeud configuré la copie du système de fichiers de référence.

A ce stade, et une fois ces opérations réalisées sur tous les noeuds, la grappe est prête à redémarrer avec son nouveau système d'exploitation.

Il n'y a alors plus de problème jusqu'au moment où l'on doit reconfigurer la grappe. Dans ce cas il faut émettre une nouvelle instruction de déploiement ce qui a pour effet de provoquer :
- Un redémarrage de tous les noeuds,
- Un déploiement sur tous les noeuds,
- Un redémarrage de tous les noeuds une fois l'image déployée.

Pendant toutes ces étapes le cluster est indisponible pour des calculs. La durée de ces étapes représente :
- plusieurs minutes,
- des risques de pannes liés aux deux séquences de démarrage.

En particulier une commande de déploiement implique forcément un redémarrage des noeuds, le déploiement sur un noeud se faisant au moment du démarrage du noeud.

### EXPOSE DE L'INVENTION

L'invention vise à remédier à tout ou partie des inconvénients de l'état de la technique identifiés ci-dessus, et notamment à proposer des moyens pour permettre une reconfiguration d'une grappe en temps quasi masqué et avec une seule séquence de démarrage.

Dans ce dessein, un aspect de l'invention se rapporte à un procédé de déploiement d'une image sur les noeuds d'une grappe d'ordinateurs comportant les étapes suivantes :
- Première Installation et configuration d'un premier ordinateur de référence en fonction d'au moins une tâche de traitement attribuée à la grappe
- Premier Enregistrement, sur un moyen de stockage connecté à un ordinateur superviseur de la grappe, d'une première image du premier ordinateur de référence comportant une copie du système de fichiers de référence du système de fichiers de l'ordinateur de référence, des instructions de configuration matérielle,
- Emission, par le superviseur vers les noeuds, d'un message de déploiement standard de la première image,
- Pour chaque noeud, redémarrage et exécution, via un micronoyau, du déploiement conformément au message de déploiement,
caractérisé en ce que le procédé de déploiement comporte les caractéristiques suivantes :
- lors de la configuration du premier ordinateur de référence, installation d'outils pour le déploiement d'une deuxième image,
- lors de l'enregistrement de la première image ajout, aux instructions de configuration matérielle, d'une instruction de création d'une partition supplémentaire.

Outre les caractéristiques principales qui viennent d'être mentionnées dans le paragraphe précédent, le procédé selon l'invention peut présenter une ou plusieurs caractéristiques complémentaires parmi les suivantes, considérées individuellement ou selon les combinaisons techniquement possibles:
- Le procédé comporte également les étapes suivantes :
   - Installation et configuration d'un deuxième ordinateur de référence en fonction d'au moins une tâche de traitement attribué à la grappe,
   - Enregistrement, sur un moyen de stockage connecté à un superviseur de la grappe, d'une première image du premier ordinateur de référence comportant une copie du système de fichiers de référence du système de fichiers de l'ordinateur de référence, des instructions de configuration matérielle,
   - Emission, par le superviseur vers les noeuds, d'un message de déploiement à chaud de la deuxième image,
   - Pour chaque noeud, exécution (2020), via la première image, du déploiement conformément au message de déploiement à chaud.
- lors de la configuration du deuxième ordinateur de référence, installation d'outils pour le déploiement d'une deuxième image.
- l'émission, par un superviseur vers les noeuds, d'un message de redémarrage est précédée par une étape de configuration du redémarrage, cette étape préalable permet de désigner une partition sur laquelle les noeuds doivent démarrer.
- un message de déploiement comporte un identifiant d'une zone de déploiement cible.

L'invention se rapporte également à un dispositif de stockage numérique comportant un fichier correspondant à des codes instructions mettant en oeuvre le procédé selon l'invention.

L'invention se rapporte également à un dispositif mettant en oeuvre le procédé selon l'invention.

### BREVE DESCRIPTION DES FIGURES

D'autres caractéristiques et avantages de l'invention ressortiront à la lecture de la description qui suit, en référence aux figures annexées, qui illustrent :
- figure 1, une illustration d'une architecture permettant la mise en oeuvre de l'invention;
- figure 2, une illustration d'étape du procédé selon l'invention.

Pour plus de clarté, les éléments identiques ou similaires sont repérés par des signes de référence identiques sur l'ensemble des figures.

L'invention sera mieux comprise la lecture de la description qui suit et à l'examen des figures qui l'accompagnent. Celles-ci sont présentées à titre indicatif et nullement limitatif de l'invention.

### DESCRIPTION DETAILLEE D'UN MODE DE REALISATION

Pour la description du procédé on attribue des étapes ou des actions à des machines de type ordinateur. Une telle machine comporte au moins un microprocesseur et une mémoire de stockage. La mémoire de stockage permet d'enregistrer des codes instructions dont l'interprétation permet la mise en oeuvre des étapes ou des actions. Donc, lorsque l'on attribue une action à une machine, celle-ci est en fait réalisée par un microprocesseur de la machine interprétant des codes instructions enregistrés dans une mémoire de la machine.

Pour la description du procédé on attribue des communications à des machines de type ordinateur. Ces communications sont réalisées via de échanges de messages selon un protocole prédéterminé mis en oeuvre au moins par une carte réseau, câblée ou sans câble. Chaque machine impliquée dans la communication comporte sa carte réseau connecté, via un bus, à un microprocesseur de la machine. Cela permet au microprocesseur de prendre en compte les messages reçus et d'en émettre. Les cartes réseau sont par ailleurs connectées à un réseau, par exemple de type Ethernet. Il y a d'autre type de réseau comme les réseaux à fibre optique ou les réseaux wifi.

Lorsque l'on dit qu'une action est effectuée par un système d'exploitation, une application ou une zone de code instructions, cette action correspond à la mise en oeuvre, par un microprocesseur, des codes instructions correspondant.

On dit, pour un ordinateur, qu'un système d'exploitation est actif quand il est celui qui contrôle, c'est-à-dire il est celui dont les codes instructions sont exécutés, l'ordinateur.

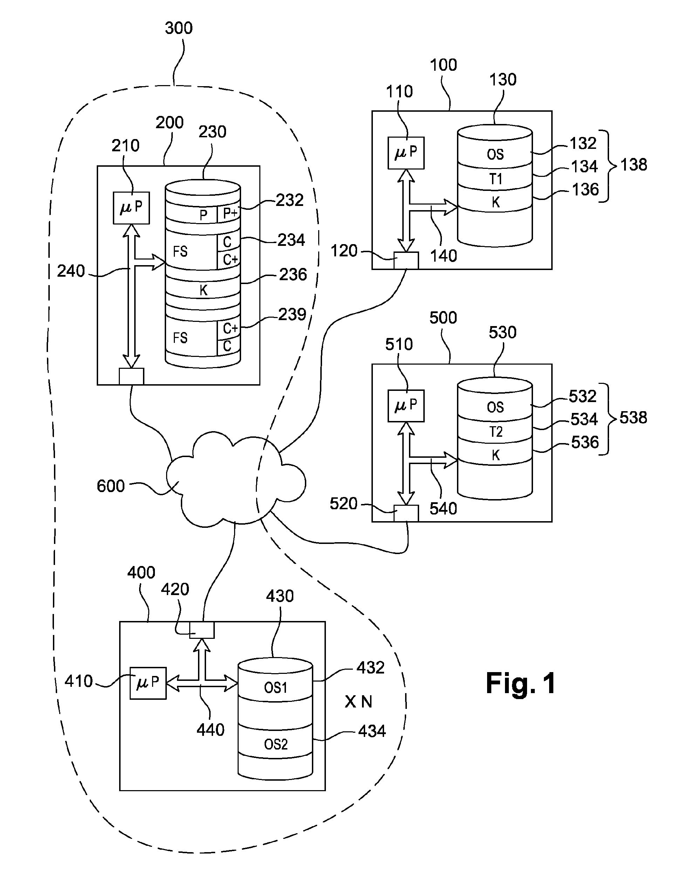

La figure 1 montre un premier ordinateur 100 de référence. Le premier ordinateur 100 de référence comporte :
- Un microprocesseur 110,
- Une interface 120 réseau,
- Un moyen 130 de stockage, par exemple un disque dur.

L'homme du métier comprendra aisément qu'il s'agit d'une description pratique d'un moyen de stockage. Dans la pratique le moyen de stockage peut être composé de plusieurs composants physiques, disques durs selon plusieurs connectiques (IDE, SCSI, eSCSI, ATA, SATA, eSATA, USB,...) et plusieurs configuration (JBOD, RAID0, RAID1, RAID5,...), disque mémoire,... la liste n'est pas exhaustive. Ces remarques s'appliquent pour tous les ordinateurs décrits.

Les éléments du premier ordinateur 100 de référence sont interconnectés par un bus 140. Les éléments du premier ordinateur 100 de référence interconnectés par le bus 140 sont :
- Le microprocesseur 110,
- L'interface 120 réseau,
- Le moyen 130 de stockage.

La figure 1 montre que le moyen 130 de stockage du premier ordinateur 100 de référence comporte plusieurs zones. Parmi des zones de moyens de stockage on ne décrit et n'illustre que celles utiles à la compréhension de l'invention. L'ensemble de ces zones, décrites et non décrites, forment un système de fichiers. En particulier un système de fichiers 138 du premier ordinateur 100 de référence comporte :
- Une zone 132 système d'exploitation : il s'agit des codes instructions correspondant à un premier système d'exploitation qui a été installé sur le premier ordinateur de référence,
- Une zone 134 application : il s'agit des codes instructions d'applications permettant la réalisation de tâches spécifiques. En général ces tâches spécifiques sont des traitements sur des images, des données météorologiques, des paramètres d'expériences simulées, des données de modèles mathématiques,... la liste n'est pas exhaustive.
- Une zone 136 outils de déploiement : il s'agit d'une zone spécifique à l'invention. Il s'agit de code instruction permettant le déploiement par le premier système 132 d'exploitation d'un second système d'exploitation sur le moyen 130 de stockage du premier ordinateur 100 de référence.

Evidement le déploiement d'un second système d'exploitation ne va pas se faire sur le premier ordinateur 100 de référence, mais il est notable qu'avec l'invention un tel déploiement est possible pendant qu'un premier système d'exploitation est actif.

La figure 1 montre un ordinateur 200 superviseur d'une grappe 300 de serveurs.. Le premier ordinateur 200 superviseur comporte :
- Un microprocesseur 210,
- Une interface 220 réseau,
- Un moyen 230 de stockage, par exemple un disque dur.

Les éléments du premier ordinateur 200 superviseur sont interconnectés par un bus 240. Les éléments du premier ordinateur 200 superviseur interconnectés par le bus 240 sont :
- Le microprocesseur 210,
- L'interface 220 réseau,
- Le moyen 230 de stockage.

La figure 1 montre que le moyen 230 de stockage du premier ordinateur 200 superviseur comporte plusieurs zones. En particulier le moyen 230 de stockage du premier ordinateur 200 superviseur comporte :
- Une zone 232 de prise d'image : cette zone comporte des codes instruction permettant de produire une image d'un ordinateur de référence. La zone 232 comporte elle-même une zone 232P de prise d'image permettant de produire une image standard, telle que produite dans l'état de la technique, et une zone 232P+ de prise d'image étendue permettant la mise en oeuvre d'une spécificité de l'invention.
- Une zone 234 image. Cette zone comporte une image d'un premier ordinateur de référence. Le moyen de stockage 230 de l'ordinateur 200 superviseur comporte autant de zones du type de la zone 234 image que de configurations d'ordinateurs susceptibles d'être déployées dans des noeuds de la grappe 300. La zone 234 image comporte elle-même plusieurs zones :
   - Une zone 234FS système de fichier,
   - Une zone 234C instructions de configuration matérielle,
   - Et une zone 234C+ instruction de configuration matérielle étendue, cette zone est spécifique de l'invention.
- Une zone 236 de déploiement contenant les codes instructions permettant un déploiement d'une image du type de celle enregistrée dans la zone 234 image dans des noeuds de la grappe 300. La zone 236 est spécifique de l'invention.
- Une zone 239 image. Cette zone comporte une image d'un deuxième ordinateur de référence. La zone 239 image comporte elle-même plusieurs zones :
   - Une zone 239FS système de fichier,
   - Une zone 239C instructions de configuration matérielle,
   - Et une zone 239C+ instruction de configuration matérielle étendue, cette zone est spécifique de l'invention.

La figure 1 montre un premier noeud 400 de la grappe 300. Le noeud 400 comporte :
- Un microprocesseur 410,
- Une interface 420 réseau,
- Un moyen 430 de stockage, par exemple un disque dur.

Les éléments du premier noeud 400 sont interconnectés par un bus 440. Les éléments du premier noeud 400 interconnectés par le bus 440 sont :
- Le microprocesseur 410,
- L'interface 420 réseau,
- Le moyen 430 de stockage.

La figure 1 montre que le moyen 430 de stockage du noeud 400 comporte plusieurs zones. En particulier le moyen 403 de stockage du noeud 400 comporte :
- Une zone 432 premier système,
- Une zone 434 second système.

La grappe 300 comporte N noeuds chacun ayant une structure identique à celle décrite pour le premier noeud 400. Une valeur classique pour N est 1000. Cependant l'enseignement reste valable pour toutes les valeurs de N existante et à venir. Dans cette projection N est le nombre de noeuds dans une ferme de calcul.

Les zones 432 premier système et 434 second système sont destinées à enregistrer une image machine lors d'un déploiement piloté par l'ordinateur 200 superviseur.

La figure 1 montre un deuxième ordinateur 500 de référence.. Le deuxième ordinateur 500 de référence comporte :
- Un microprocesseur 510,
- Une interface 520 réseau,
- Un moyen 530 de stockage, par exemple un disque dur.

Les éléments du deuxième ordinateur 500 de référence sont interconnectés par un bus 540. Les éléments du deuxième ordinateur 500 de référence interconnecté par le bus 540 sont :
- Le microprocesseur 510,
- L'interface 520 réseau,
- Le moyen 530 de stockage.

La figure 1 montre que le moyen 530 de stockage du deuxième ordinateur 500 de référence comporte plusieurs zones. En particulier un système de fichiers 538 du deuxième ordinateur 500 de référence comporte :
- Une zone 532 système d'exploitation : il s'agit des codes instructions correspondant à un deuxième système d'exploitation qui a été installé sur le deuxième ordinateur de référence,
- Une zone 534 application : il s'agit des codes instructions d'applications permettant la réalisation de tâches spécifiques.
- Une zone 536 outils de déploiement : il s'agit d'une zone spécifique à l'invention. Il s'agit de code instruction permettant le déploiement par le deuxième système 532 d'exploitation d'un autre système d'exploitation sur le moyen 530 de stockage du premier ordinateur 500 de référence.

L'existence du deuxième ordinateur 500 de référence est justifiée par, par exemple, l'une des conditions suivantes :
- 1^{er} cas : des codes instructions de la zone 532 système d'exploitation du deuxième ordinateur 500 de référence sont différents des codes instructions de la zone 132 système d'exploitation du premier ordinateur 100 de référence, ou
- 2eme cas : des codes instructions de la zone 534 application du deuxième ordinateur 500 de référence sont différents des codes instructions de la zone 134 application du premier ordinateur 100 de référence.

Le premier cas correspond, par exemple, à une mise à jour d'un système d'exploitation ou à un besoin d'un autre système d'exploitation pour permettre un nouveau traitement. Le deuxième cas correspond à un nouveau besoin de traitement.

Dans l'exemple de la description le premier ordinateur 100 de référence, l'ordinateur 200 superviseur, le noeud 400 et le deuxième ordinateur 500 de référence sont interconnectés par un réseau 600.

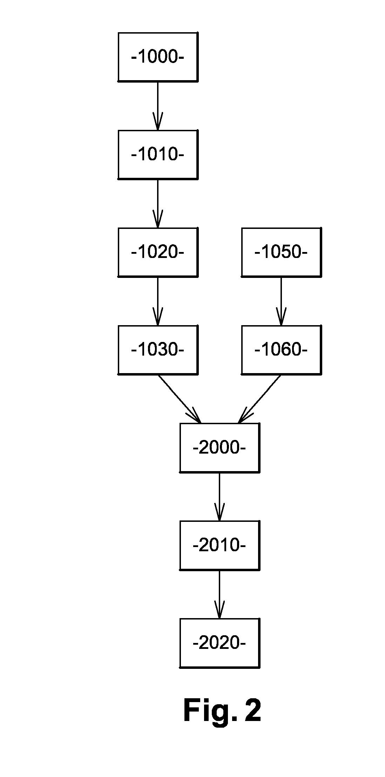

La figure 2 montre une première étape 1000 d'installation et de configuration du premier ordinateur 100 de référence. Il s'agit d'une étape classique d'installation d'un système d'exploitation sur une machine. L'installation se fait à partir d'un média (cd/dvd rom, clé usb, réseau,...) amorçable. A la fin de l'installation on installe :
- des applications spécifiques à un premier traitement que doit effectuer la grappe 300,
- des applications de déploiement pour le déploiement à chaud d'une image système. En particulier ces applications de déploiement sont aptes à transférer des données vers une partition locale non utilisé par le système actif. Tous les moyens de transfert de données sont envisageables. On cite pour l'exemple FTP (File Transfert Protocol pour protocole de transfert de fichier), UDP (User Datagram Protocol pour protocole de datagramme d'utilisateur), bitorrent (protocole de transmission de pair à pair).

La première étape 1000 d'installation et de configuration est mise en oeuvre par le premier ordinateur 100 de référence.

Le déploiement à chaud permet de déployer une image système sur un ordinateur alors qu'un système d'exploitation est déjà actif sur ledit ordinateur.

La figure 2 montre que l'étape 1000 d'installation et de configuration du premier ordinateur de référence est suivie par une première étape 1010 d'enregistrement d'une image du premier ordinateur 100 de référence. La première étape 1010 d'enregistrement est mise en oeuvre par l'ordinateur 200 superviseur. Dans la première étape 1010 d'enregistrement l'ordinateur 200 superviseur, commandé par les codes instructions de la zone 232 établie une communication de prise d'image avec le premier ordinateur 100 de référence via le réseau 600. Une étape d'enregistrement peut être réalisée via un media de stockage amovible que l'on connecte au premier ordinateur 100 de référence puis à l'ordinateur 200 superviseur.

Du côté du premier ordinateur de référence 100 la communication de prise d'image est assurée grâce aux code instruction de la zone 136 ou de la zone 132. Si c'est la zone 136 alors il s'agit d'un protocole spécifique, sinon on utilise un protocole standard du type de ceux précédemment cités.

Au cours de la communication de prise d'image l'ordinateur 200 superviseur demande au premier ordinateur 100 de référence de lui envoyer une copie de son système de fichier. Cette copie est enregistrée dans la zone 234FS du moyen de stockage 230 de l'ordinateur 200 superviseur. A la fin de la copie, l'ordinateur 200 superviseur enregistre, dans la zone 234C du moyen de stockage 230 de l'ordinateur 200 superviseur des instructions de configuration matérielle. Ces instructions sont, entre autres, des instructions de partitionnement de disque et de création de volumes logiques. Pour l'exemple une partition disque suffit à l'installation d'un système d'exploitation. Ces instructions dépendent des caractéristiques matérielles des noeuds de la grappe 300.

Selon l'invention, après la copie, l'ordinateur 200 superviseur met également en oeuvre les codes instructions de la zone 234C+ du moyen de stockage 230 de l'ordinateur 200 superviseur. Cela permet d'ajouter au moins une partition disque. L'ajout se fait de telle sorte que :
- La taille de toutes les partitions disques ensemble n'excède pas, pour chaque noeud de la grappe 300, la capacité des moyens de stockage du noeud,
- La taille de la partition ajoutée permet :
   - L'installation d'un système d'exploitation
   - L'exécution d'application par le système d'exploitation installé.

De manière classique un système d'exploitation a besoin de deux à quatre Go pour s'installer. Une taille de dix Go est donc un minimum raisonnable pour la partition disque ajoutée. Cependant, selon les applications et les systèmes d'exploitation, cinq Go peuvent suffire.

Le respect des contraintes de taille est réalisé :
- Soit en réduisant la taille d'une ou plusieurs partitions déjà créées pour permettre la création de la partition supplémentaire,
- Soit en prenant en compte dès le départ le fait qu'il y aura une partition supplémentaire.

Avec l'invention on peut bien entendu créer plus d'une partition supplémentaire.

Par supplémentaire on entend le fait que la partition supplémentaire n'est pas requise pour le fonctionnement du premier système d'exploitation correspondant au système de fichiers enregistré dans la zone 234FS du moyen de stockage 230 de l'ordinateur 200 superviseur.

Les instructions de configuration étendues comportent également des informations de configuration système propre aux installations multi-amorçage. Ces instructions permettent de configurer un ordinateur pour qu'il puisse démarrer dans un environnement multi-systèmes. En particulier ces instructions étendues permettent la création des enregistrements de démarrage de partition aussi connus sous l'abbréviation PBR pour le lanceur GRUB (http.//www.gnu.org/software/grub/index.html), ou de leur équivalent pour d'autres lanceurs.

La première étape 1010 d'enregistrement d'une image est suivie d'une étape 1020 d'émission, par l'ordinateur 200 superviseur vers des noeuds de la grappe 300 et en particulier vers le premier noeud 400, d'un message de déploiement. Il s'agit d'un message de déploiement standard.

Dans une première étape 1030 de déploiement, le premier noeud 400 reçoit le message de déploiement émis par l'ordinateur 200 superviseur à l'étape 1020. Le noeud effectue alors les opérations suivantes :
- Redémarrage en mode déploiement réseau,
- Récupération de l'image système désignée par le message de déploiement,
- Exécution des instructions de configurations matérielles comprises dans l'image système récupérée,
- Recopie du système de fichiers compris dans l'image système récupérée.

Selon l'invention l'exécution des instructions de configuration matérielle provoque la création de partition disque en surnombre. Cela signifie qu'au moment de la recopie du système de fichier au moins une des partitions créée ne sera pas utilisée et sera donc disponible pour un usage ultérieure. Les instructions de configuration matérielle comporte aussi des instructions de configuration du secteur d'amorce de l'ordinateur sur lequel le déploiement s'effectue. Ce secteur d'amorce est configuré pour un amorçage double avec un démarrage par défaut sur le système qui vient d'être déployé.

A la fin de la première étape 1030 de déploiement le premier noeud 400 est près pour un redémarrage local sur la partition correspondant au système d'exploitation dont l'image vient d'être déployée.

Une fois que la première étape 1030 de déploiement a été réalisé par tous les noeuds de la grappe 300 ciblés par le déploiement, c'est-à-dire ayant reçu le message émis par l'ordinateur 200 superviseur à l'étape 1020 d'émission, la grappe 300 est prête à être redémarrée.

A partir de ce point on considère que la grappe a redémarré.

La figure 2 montre une deuxième étape 1050 d'installation et de configuration du deuxième ordinateur 500 de référence. Cette étape est similaire à la première étape 1000 d'installation et de configuration du premier ordinateur 100 de référence. L'installation se fait à partir d'un média amorçable. A la fin de l'installation du système d'exploitation on installe :
- des applications spécifiques à un deuxième traitement que doit effectuer la grappe 300,
- des applications de déploiement pour le déploiement à chaud d'une image système. Ces applications de déploiement sont fonctionnellement identiques que celle installée à la première étape 1000 d'installation et de configuration du premier ordinateur 100 de référence.

On utilise l'expression fonctionnellement identique pour illustrer le fait que si les systèmes d'exploitation ne sont pas les même, les binaires des applications ne seront pas les même mais les fonctions réalisées sont bien les mêmes.

On remarque que le deuxième ordinateur de référence peut être le premier qui aura été reconfiguré en vue de l'acquisition de la deuxième image de référence.

Dans le cas de la deuxième image système l'installation des applications de déploiement est optionnelle. Cependant le fait de le faire permettra des déploiements à chaud lorsque l'image sera active.

La deuxième étape 1050 d'installation et de configuration est suivie d'une deuxième étape 1060 d'enregistrement, par l'ordinateur 200 superviseur, d'une image du deuxième ordinateur 500 de référence via le réseau 600. La deuxième étape 1060 d'enregistrement est identique à la première étape 1010 d'enregistrement. A la fin de la deuxième étape 1060 d'enregistrement la deuxième zone 239 image du moyen 230 de stockage de l'ordinateur 200 superviseur comporte une image du deuxième ordinateur 500 de référence.

La première étape de déploiement 1030 standard et la deuxième étape 1060 d'enregistrement sont suivies d'une étape 2000 d'émission d'un message de déploiement à chaud au cours de laquelle, l'ordinateur 200 superviseur émet, vers des noeuds de la grappe 300, un message de déploiement à chaud.

Un message de déploiement à chaud se différencie d'un message de déploiement standard par le fait qu'un champ de ces messages change de valeur de l'un à l'autre permettant ainsi de les distinguer.

L'étape 2010 d'émission d'un message de déploiement à chaud est suivie d'une étape 2020 d'exécution du déploiement à chaud par tous les noeuds de la grappe 300 qui reçoivent ledit message.

Par exemple le premier noeud 300 effectue les étapes suivantes :
- Récupération de l'image correspondant à la deuxième zone 239 image du moyen de stockage 230 de l'ordinateur 200 superviseur,
- Exécution des instructions de configuration standard, c'est-à-dire non étendue, de la zone 239C configuration matérielle de la deuxième zone 239 image du moyen de stockage 230 de l'ordinateur 200 superviseur, et à l'exclusion des instructions partitionnement, un partitionnement ayant déjà été réalisé lors de la première étape 1030 de déploiement standard.
- Recopie du système de fichier de l'image récupérée sur la partition déjà préparée au moment de la première étape 1030 de déploiement standard.

Le déploiement à chaud est terminé. Le premier noeud n'a pas redémarré. Cela est possible car, au niveau du premier noeud, le déploiement à chaud a été réalisé sous le contrôle des codes instructions correspondant à la deuxième zone 136 outils de déploiement du moyen de stockage 130 du premier ordinateur 100 de référence. Les éventuels futurs déploiements ont donc été préparés dès la configuration des images systèmes. Toutes images comportant les outils de déploiement est apte à réaliser un déploiement à chaud.

Il est dès lors possible, à partir de l'ordinateur 200 superviseur, d'émettre un message de redémarrage local. Ce message est accompagné d'un identifiant d'une partition sur laquelle le démarrage local doit être effectué. Soit ce message est configuré pour contenir cet identifiant de partition. Soit le cycle de démarrage local comporte une étape permettant de déterminer cet identifiant de partition. Par exemple lors de la configuration réseau par un serveur DHCP, ce serveur émet aussi un fichier de configuration de démarrage identifiant la partition sur laquelle il faut démarrer. La réponse du serveur DHCP aura été configurée avant l'émission du message de redémarrage.

De la même manière le message de démarrage est, dans une variante, accompagné de tout ou partie d'informations de configuration requises par le lanceur installé sur les noeuds.

Il est alors possible de faire un déploiement à chaud depuis n'importe quel système actif pour peu qu'il comporte les outils de déploiement. Par défaut un déploiement à chaud se fait sur la partition correspondant au système qui n'est pas actif.

Dans une variante de l'invention le message de déploiement à chaud, ou les instructions de configuration matérielle étendue comporte un identifiant d'une partition sur laquelle effectuer le déploiement.

Avec l'invention il y a donc deux types de déploiement possibles :
- Standard qui implique un redémarrage initial des noeuds
- A chaud qui se fait sans redémarrage des noeuds.

L'invention permet ainsi de supprimer les inconvénients de l'état de la technique par l'utilisation d'un déploiement à chaud :
- L'image est transmise alors que les noeuds de la grappe sont encore actifs,
- Le seul redémarrage requis est pour un changement de configuration de la grappe par activation d'un autre système sur les noeuds de la grappe.

## Revendications

1. Procédé de déploiement d'une image sur les noeuds d'une grappe (300) d'ordinateurs comportant les étapes suivantes :
- Première installation et configuration (1000) d'un premier ordinateur (100) de référence en fonction d'au moins une tâche de traitement attribuée à la grappe
- Premier enregistrement (1010), sur un moyen (230) de stockage connecté à un ordinateur (200) superviseur de la grappe, d'une première image (234) du premier ordinateur de référence comportant une copie (234FS) du système de fichiers de référence du système de fichiers (138) de l'ordinateur de référence, des instructions (234C) de configuration matérielle,
- Emission (1020), par le superviseur vers les noeuds, d'un message de déploiement standard de la première image,
- Pour chaque noeud, redémarrage (1030) et exécution, via un micronoyau, du déploiement conformément au message de déploiement,
**caractérisé en ce que** le procédé de déploiement comporte les caractéristiques suivantes :
- lors de la configuration du premier ordinateur de référence, installation (1000) d'outils pour le déploiement d'une deuxième image,
- lors de l'enregistrement de la première image ajout (1010), aux instructions de configuration matérielle, d'une instruction de création d'une partition supplémentaire.

2. Procédé de déploiement selon la revendication 1, **caractérisé en ce qu'**il comporte les étapes suivantes :
- Installation et configuration (1050) d'un deuxième ordinateur de référence en fonction d'au moins une tâche de traitement attribué à la grappe,
- Enregistrement (1060), sur un moyen de stockage connecté à un superviseur de la grappe, d'une première image du deuxième ordinateur de référence comportant une copie du système de fichiers de référence du système de fichiers de l'ordinateur de référence, des instructions de configuration matérielle,
- Emission (2010), par le superviseur vers les noeuds, d'un message de déploiement à chaud de la deuxième image,
- Pour chaque noeud, exécution (2020), via la première image, du déploiement conformément au message de déploiement à chaud.

3. Procédé de déploiement selon la revendication 2, caractérisé qu'il comporte les caractéristiques suivantes :
- lors de la configuration du deuxième ordinateur de référence, installation d'outils pour le déploiement d'une deuxième image.

4. Procédé de déploiement selon l'une des revendications précédentes, **caractérisé en ce que** l'émission, par un superviseur vers les noeuds, d'un message de redémarrage est précédé par une étape de configuration du redémarrage, cette étape préalable permet de désigner une partition sur laquelle les noeuds doivent démarrer.

5. Procédé de déploiement selon l'une des revendications précédentes, **caractérisé en ce qu'**un message de déploiement comporte un identifiant d'une zone de déploiement cible.

6. Dispositif de stockage numérique comportant un fichier correspondant à des codes instructions mettant en oeuvre le procédé selon l'une des revendications précédentes.

7. Dispositif mettant en oeuvre le procédé selon l'une des revendications précédentes.
